# EUROPÄISCHE PATENTANMELDUNG

(11) **EP 1 511 338 A1**
(43) Veröffentlichungstag der Anmeldung: **02.03.2005**
(21) Anmeldenummer: 04018995.3
(22) Anmeldetag: 11.08.2004
(51) Int. Cl.: H04Q 7/34, H04Q 7/28

(54) **Verfahren und Datenverwaltungsmodul zur Verwaltung von Funknetzen**

(30) Priorität: 25.08.2003 DE 10338968
(71) Anmelder: R & S BICK Mobilfunk GmbH, 31848 Bad Münder (DE)
(72) Erfinder: Helmer, Andreas Dipl.-Ing, 31848 Bad Münder (DE); Strohmeier, Uwe Dipl.-Ing, 30890 Barsinghausen (DE); Klausing, Matthias Dipl.-Ing, 31834 Springe (DE); Entelmann, Manfred Dipl.-Ing, 30519 Hannover (DE); Wehrs, Volker Dipl.-Ing, 30449 Hannover (DE)
(74) Vertreter: Gerstein, Hans Joachim

(57) **Zusammenfassung**

Ein Verfahren zur Verwaltung von Funknetzen, insbesondere von TETRA-Bündelfunknetzen, wobei die Vermittlungsstellen (DMX) und Basisstationen (DTX) hierarchisch geordnete Datenverwaltungsmodule (DM) haben, und wobei die Datenverwaltungsmodule (DM) die Datenkommunikation von Clientmodulen steuern, hat die Schritte:
a) Registrieren der Datenverwaltungsmodule (DM) bei ihren jeweils in der Hierarchieebene übergeordneten Datenverwaltungsmodulen (DM),
b) Registrieren von Clientmodulen jeweils an einem ausgewählten Datenverwaltungsmodul (DM),
c) Abonnieren von für die Verwaltung und den Betrieb angeschlossener Clientmodule und/oder in der Hierarchieebene untergeordneter Datenverwaltungsmodule (DM) erforderliche Daten oder Datenänderungen durch Eintrag der Datenart in einer Abonnement-Liste bei dem übergeordneten Datenverwaltungsmodul (DM), und
d) Weitergeben von abonnierten Daten von einem Datenverwaltungsmodul (DM) an das in der Hierarchieebene untergeordnete Datenverwaltungsmodul (DM) und/oder Clientmodul, wenn die Datenart in der Abonnement-Liste für das in der Hierarchieebene untergeordnete Datenverwaltungsmodul (DM) oder Clientmodul eingetragen ist.

## Beschreibung

Die Erfindung betrifft ein Verfahren zur Verwaltung von Funknetzen, insbesondere von TETRA-Bündelfunknetzen, die zur Kommunikation mit Mobilfunkgeräten eine Vielzahl von miteinander gekoppelten Vermittlungsstellen und an die Vermittlungsstellen angeschlossene Sende-/Empfangsbasisstationen haben.

Derartige Funkkommunikationsnetze sind beispielsweise als Mobilfunknetze nach dem GSM-Standard (Globales System für mobile Kommunikation) oder dem TETRA-Standard (Terrestrial Trunked Radio) als Bündelfunksystem bekannt. TETRA-Funknetze bieten im Vergleich zu GSM-Funknetzen bessere Möglichkeiten zur Gruppenkommunikation (Gruppenruf) und wesentlich schnellere Rufaufbauzeiten. Aufgrund der digitalen Datenübertragung kann auch eine dynamische Ressourcenvergabe erfolgen, wodurch eine optimale Ausnutzung der vorhandenen Kanäle und Bandbreiten auf die Teilnehmer vorgenommen wird. Die Architektur dieser Funknetze ist zellulär und wird durch Basisstationen und ihnen übergeordnete Vermittlungsstationen aufgebaut. Die Basisstationen beinhalten Funkantennen, die über eine Luftschnittstelle den Kontakt zu dem mobilen Funkgeräten halten. Jede Basisstation formt dabei im Normalfall eine Funkzelle und ist für die Vermittlung innerhalb dieser Zelle zuständig. Die übergeordneten Vermittlungsstationen sind für die zellenübergreifende Vermittlung von Funkrufen zuständig.

Zur Verwaltung der Funknetz-Infrastruktur und der Funkrufe sind in den Vermittlungsstellen und Basisstationen entsprechende Verwaltungseinheiten vorgesehen. So beinhalten die Vermittlungsstellen einen sogenannten Core-Operation-Server, der für die Anrufsteuerung und das Mobilitätsmanagement zuständig ist. Die Basisstationen beinhalten einen sogenannten (TETRA)-Operation-Server, der ebenfalls für die Anrufsteuerung und das Mobilitätsmanagement zuständig ist und mit dem Core-Operation-Server der Vermittlungsstelle kommuniziert.

Mit wachsender Anzahl von Komponenten der Schalt- und Verwaltungsinfrastruktur mit Leitungen, Vermittlungsstellen (Switch), Basisstationen etc. und wachsenden Datenmengen, insbesondere mit wachsender Teilnehmerzahl, können die herkömmlichen direkten Schnittstellen zwischen den den einzelnen Komponenten kaum noch wirtschaftlich und technisch betrieben werden.

Die nachveröffentlichte EP 1 351 527 A1 beschreibt eine Verwaltungszentrale für ein Telekommunikationssystem mit Servern zur Speicherung von Daten über Netzwerkelemente und deren Zuordnung zur Ressourcenmanagern.

In dem US-Patent 5,752,196 ist ein Verfahren und ein Funkkommunikationssystem beschrieben, bei dem Teilnehmer einer Kommunikationsgruppe durch Austauschdaten registriert werden, die in permanenten und temporären Datenbanken abgelegt sind.

In der WO 95/20300 ist ein Verfahren zur Verwaltung eines Funkkommunikationssystems mit Basisstationen und mobilen Stationen sowie einer zentralen Datenbank zur Speicherung von Teilnehmerdaten beschrieben. Die Teilnehmerdaten werden auch in einer entsprechenden Datenbank der Basisstationen vorgehalten, so dass bereits in den Basisstationen eine Zugangskontrolle stattfinden kann. Die Basisstationen greifen auf die Teilnehmerdaten durch Zugriff von einer zentralisierten Datenbank zu.

In dem US-Patent 6,370,572 B1 ist ein Verfahren zur Verwaltung eines verteilten Kommunikationsnetzwerkes beschrieben, bei dem eine Vielzahl von hierarchisch verwalteten Steueragenten eingesetzt werden, die in Echtzeit eine verteilte Steuerung von Netzwerkkomponenten übernehmen. Die Steuerungsagenten werden auf Zellebene in den Basisstationen und in den übergeordneten Ebenen eingesetzt.

In Ping, Wang u. a.: A scalable hierarchical architecture for distributed network management in: 2001 International Conference on Computer Networks and Mobile Computing, Proceedings, 2001, S. 21-26 ist ein hierarchisches, skalierbares und dynamisches Verwaltungsverfahren für große verteilte Netzwerke beschrieben, das ereignisgesteuerte Verwaltungsmechanismen nutzt. Die Verwaltungsaufgaben werden auf Agenten aufgeteilt, die Daten von den verwalteten Einheiten in Abhängigkeit von deren Registrierung sammeln.

In der US-2003/0061329 A1 ist ein Verfahren zur Protokollierung von Daten in einem zellulären Datennetzwerk beschrieben.

In der EP 0 963 076 A2 ist ein Verfahren zur ferngesteuerten Verwaltung von Telekommunikationsnetzwerkelementen über das Internet beschrieben. Die Netzwerkkomponenten werden hierbei hierarchisch mit Hilfe von objektorientierten Datenverwaltungsmodulen gesteuert, die bei einem Server registriert werden. Mit Hilfe der Datenverwaltungsmodule wird ein bedarfsgerechter Datenaustausch gesteuert.

Aufgabe der Erfindung ist es daher, ein verbessertes Verfahren zur Verwendung von Funknetzen, inbesondere von TETRA-Bündelfunknetzen, zu schaffen, mit dem eine einheitliche und skalierbare Kommunikationsschnittstelle zur Datenspeicherung, Datenhaltung und dem Datenzugriff innerhalb der Schalt- und Verwaltungsinfrastruktur mit einfachen und leicht modifizierten Mitteln bereitgestellt wird.

Die Aufgabe wird mit dem gattungsgemäßen Verfahren mit Hilfe von hierarchisch geordneten Datenverwaltungsmodulen zur Steuerung der Datenkommunikation von Clientmodulen, die Elemente der Vermittlungsstellen und/oder Basisstationen oder an die zugehörige Vermittlungsstelle oder Basisstation angeschlossene und bei dem jeweiligen Datenverwaltungsmodul registriert sind, mit den Schritten gelöst von:
a) Registrieren der Datenverwaltungsmodule bei ihren jeweils in der Hierarchieebene übergeordneten Datenverwaltungsmodulen;
b) Registrieren von Clientmodulen jeweils an einem ausgewählten Datenverwaltungsmodul;
c) Abonnieren von ausgewählten durch die Datenverwaltungsmodule verwalteten Daten, wobei ein in der Hierarchieebene untergeordnetes Datenverwaltungsmodul bei dem übergeordneten Datenverwaltungsmodul, an dem das Datenverwaltungsmodul registriert ist, für die Verwaltung und den Betrieb angeschlossener Clientmodule und/oder in der Hierarchieebene untergeordneter Datenverwaltungsmodule erforderliche abonnierte Daten oder Datenänderungen durch Eintrag der Datenart in einer Abonnement-Liste anfordert, und
d) Weitergeben von abonnierten Daten von einem Datenverwaltungsmodul an das in der Hierarchieebene untergeordnete Datenverwaltungsmodul und/oder Clientmodul, wenn die Datenart in der Abonnement-Liste für die das in der Hierarchieebene untergeordnete Datenverwaltungsmodul oder Clientmodul eingetragen ist.

Im Unterschied zu den herkömmlichen Verwaltungsverfahren für Funknetze wird somit für jede Komponente des Funknetz-Systems ein einheitliches Datenverwaltungsmodul bereitgestellt, mit dem die Kommunikation mit den anderen Systemkomponenten gesteuert wird. Die Vernetzung der Komponenten untereinander erfolgt dann durch Registrierung des Datenverwaltungsmoduls einer Komponente an den Datenverwaltungsmodulen derjenigen Komponenten, mit denen ein Datenaustausch erfolgen soll.

Erfindungsgemäß wird mit der Registrierung von dem registrierenden Datenverwaltungsmodul festgelegt, welche Daten auszutauschen sind. Diese Definition der auszutauschenden Daten wird in einer Abonnement-Liste festgelegt. Auf diese Weise kann das zu übertragende Datenvolumen erheblich reduziert werden, da nur die tatsächlich abonnierten Daten vorzugsweise ohne semantische Bewertung durch das Datenverwaltungsmodul ausgetauscht werden müssen.

Die Clientmodule können z. B. in einer Vermittlungsstation ein Core-Operation-Server sein, der die Kernfunktionalität der Vermittlungsstation mit den Aufgaben der Vermittlung und der Rufkontrolle enthält. Clientmodule in einer Basisstation können beispielsweise ein TETRA-Operation Server mit der Kernfunktionalität des Mobilitätsmanagements der Basisstation, ein Basisstations-Controller sowie ein oder mehrere Transceiver sein. Mögliche Clientmodule in Basis- und/oder Vermittlungsstationen können auch Network Element Manager NEM sein. Es kann auch Clientmodule außerhalb der Netzelemente des Funknetzes geben, z.B das Inter System Interface ISI welches eine Brückenfunktion zu anderen TETRA-Funknetzen hat. Des weiteren ist die ACAPI-Plattform (Accessnet Common Application Interface) ein potentielles Clientmodul.

Clientmodule können aber auch beispielsweise Exception-Requesthandler sein. Dies sind spezielle Clientmodule, an die sich das Datenverwaltungsmodul bei besonderen Problemen wendet. Exception-Requesthandler sind in der Lage, diese Probleme semantisch zu bewerten und aufzulösen. Beispiele hierfür sind das Authentication Center, das den Funktionsumfang einer Komponente definiert, die für die Authentifzierung von Teilnehmern und mobilen Funkgeräten sowie für die Erzeugung von Verschlüsselungsdaten zuständig ist. Das Authentication Center ist Teil des TETRA-Standards und spielt bei der Registrierung eine Rolle, wenn der Teilnehmer sich authentifizieren muss. Zudem ist es bei verschlüsselten Übertragungen maßgeblich beteiligt, indem es die Schlüssel generiert.

Ein Exception-Requesthandler kann auch ein Equipment Identification Register zur Identifikation und gegebenenfalls Sperrung von mobilen Endgeräten sein. Es enthält entweder Informationen über gesperrte mobile Endgeräte oder eine Liste von Teilnehmeridentifikationsnummern zur Identifikation von zulässigen mobilen Endgeräten. Das Equipment Identification Register spielt bei der Registrierung von Teilnehmern eine Rolle, wenn geprüft werden muss, ob das verwendete mobile Funkgerät eventuell als gestohlen gemeldet wurde.

Die abonnierten Daten können beispielsweise operative Daten, wie Teilnehmerdaten sein. Diese werden von dem Datenverwaltungsmodul durch Entgegennahme, Aktualisierung, Speicherung und Zurverfügungstellung an andere Komponenten verwaltet. Über diese Datenhaltung, Datenverteilung und den Datenzugriff hinaus ist das Datenverwaltungsmodul nicht für die Applikationslogik, für die semantische Auswertung der verwalteten Daten und Anwendung der Daten zuständig.

Teilnehmerdaten sind Listen über die Funknetzteilnehmer sowie Gruppendaten mit der Zuordnung der Teilnehmer zu Gruppen, Flottendaten mit der Zuordnung von Gruppen und Individualteilnehmern zu einer Flotte und Dispatcher Daten von Teilnehmern, die über ausreichende Rechte zur Verwaltung anderer Teilnehmer besitzen.

Abonnierte Daten können auch Metadaten zur Beschreibung der operativen Daten sein. Über Metadaten wird das Datenmodell der definierten operativen Daten mit Datentyp (String, Integer, Boolean, Float, Datumsangaben, Listen, Binärdaten und Datenstrukturen (Feldlänge in Bytes und Datenschema als syntaktischer Aufbau einer Datenstruktur) beschrieben. Die Metadaten können auch spezielle und allgemeine Attribute für die Daten beinhalten, die später im Detail erläutert werden.

Abonnierte Daten können auch Verwaltungsdaten zur Verwaltung des aktuellen Zustands des Datenverwaltungsmoduls sein. Die Verwaltungsdaten umfassen beispielsweise Daten über bestehende Abonnements oder aktuell registrierte Clientmodule.

Weiterhin können abonnierte Daten Konfigurationsdaten zur Konfiguration der Datenverwaltungsmodule sein, die z. B. Daten über die Hierarchiebeziehungen zwischen den Datenverwaltungsmodul-Instanzen oder andere Konfigurationseinstellungen beinhalten.

Abonnierte Daten können auch Attributdaten als Zusatzinformation zu den Daten sein, wie beispielsweise das Erzeugungsdatum eines Datensatzes. Sowohl operative Daten als auch Metadaten können mit den oben erwähnten allgemeinen speziellen Attributen ausgestattet sein, mit denen bestimmte Prozesse gesteuert werden können. Die abonnierten Daten werden von einem Datenverwaltungsmodul an ein Umsystem, d. h. an ein anderes Datenverwaltungsmodul und/oder Clientmodul als Notifikationsnachrichten weitergegeben. Die Notifikationsnachrichten können die Daten, über deren Änderung mit der Notifikation informiert werden soll, enthalten. Es kann jedoch auch Notifikationsnachrichten geben, die nur die reine Information über eine Datenänderung enthalten, ohne die geänderten Daten selbst.

Abonnierte Daten können aber auch durch Übertragen von Änderungen abonnierter Daten zwischen hierarchisch durch Registrierung miteinander gekoppelten Datenverwaltungsmodulen repliziert werden. Derartige Replikationsnachrichten enthalten Replikationsinformationen zur Weitergabe zwischen Datenverwaltungsmodul-Instanzen.

Es ist vorteilhaft, wenn die Replikation abonnierter Daten in Abhängigkeit von der Datenart an alle in der Hierarchieebene übergeordnete Datenverwaltungsmodule und alle in der obersten Ausgangs-Hierarchieebene miteinander gekoppelte Datenverwaltungsmodule erfolgt. Auf diese Weise werden die miteinander verbundenen Datenverwaltungsmodule auf einem Stand gehalten. Die Datenreplitation kann dabei mit einer definierbaren Strategie und Priorität unter Gewährleistung der Konsistenz erfolgen.

Zur Sicherstellung einer ordnungsgemäßen Datenkommunikation ist es vorteilhaft, einen globalen Anfragecode in einem Datenverwaltungsmodul nach Empfang einer Datenanfrage durch ein Clientmodul an das Datenverwaltungsmodul zu generieren. Nach Verarbeitung der Anfrage durch die Datenverwaltungsmodule wird der globale Anfragecode von dem Datenverwaltungsmodul an das Clientmodul zurückgesendet.

Die Rücksendung des globalen Anfragecodes kann auch zusammen mit der Übertragung einer Statusnachricht über den erfolgreichen Abschluss der Verarbeitung der Anfrage erfolgen.

Vorteilhaft ist es, wenn bei Deregistrierung oder Verbindungsabbruch des untergeordneten Datenverwaltungsmoduls oder Clientmoduls an einem übergeordneten Datenverwaltungsmodul die für das untergeordnete Datenverwaltungsmodul oder Clientmodul in der Abonnement-Liste abgelegten Abonnement-Daten in dem übergeordneten Datenverwaltungsmodul gelöscht werden. Damit wird sichergestellt, dass keine unnötigen Daten in dem Datenverwaltungsmodul gehalten werden. Die Verantwortung für die Registrierung und Speicherung von abonnierten Daten obliegt den abonnierenden Datenverwaltungsmodulen und Clientmodulen.

Weiterhin ist es vorteilhaft, dass für den Fall, dass ein zugeordnetes primäres in der Hierarchieebene übergeordnetes Datenverwaltungsmodul für ein sich anmeldendes Datenverwaltungsmodul nicht erreichbar ist, dieses eine Registrierung bei einem sekundären in der Hierarchieebene übergeordneten Datenverwaltungsmodul vornimmt. Wenn keine Datenverwaltungsmodule erreichbar sind, erfolgt ein Umschalten der zu registrierenden Datenverwaltungsmodule in einen Inselbetrieb, in dem zyklisch überprüft wird, ob das primäre oder sekundäre Datenverwaltungsmodul wieder erreichbar ist. Damit wird sichergestellt, dass eine Registrierung ein am Datenverwaltungsmodul sobald wie möglich erfolgt. Unterdessen ist lediglich ein lokaler Betrieb oder ein Betrieb mit nicht aktuellen Verwaltungsdaten im Funknetz möglich. Im Inselbetrieb sollten Datenänderungen möglichst gespeichert und bei Aufhebung des Inselbetriebs erneut an die entsprechenden Abonnenten übertragen werden.

Nach Registrierung eines Datenverwaltungsmoduls mit dem in der Hierarchieebene übergeordneten Datenverwaltungsmodulen erfolgt vorzugsweise ein Abgleich des zur Verwaltung erforderlichen Datenbestands. Damit wird sichergestellt, dass die Datenverwaltungsmodule auf dem gleichen Stand gehalten werden.

Aufgabe der Erfindung ist es weiterhin, ein verbessertes Datenverwaltungsmodul zur Durchführung des oben beschriebenen Verfahrens zu schaffen.

Die Aufgabe wird mit dem gattungsgemäßen Datenverwaltungsmodul erfindungsgemäß gelöst durch
- eine Zugriffseinheit zur Steuerung eines Zugriffs des Datenverwaltungsmoduls auf Betriebssystem- und Netzwerkressourcen des Funknetzes;
- eine Initialisierungseinheit zur Initialisierung des Datenverwaltungsmoduls beim Starten des Datenverwaltungsmoduls;
- eine Transportsteuerungseinheit zur Steuerung der Kommunikation über ein IP-Netz;
- eine Protokollverwaltungseinheit zur Auswertung von Nachrichten und Generierung entsprechender Steuerungssignale;
- eine Anfragenverwaltungseinheit zur Verarbeitung eingehender Nachrichten und Weiterleitung an eine ausgewählte Nachrichtenverwaltungseinheit.

Es sind folgende Nachrichtenverwaltungseinheiten vorgesehen:
- eine Datenverwaltungseinheit zur Verarbeitung von Datennachrichten;
- eine Replikationsverwaltungseinheit zur Versendung von Replikationsnachrichten als abonnierte Daten an unter- und übergeordnete Datenverwaltungsmodule;
- eine Abonnement-Verwaltungseinheit zur Verwaltung von Abonnement-Nachrichten und Abonnement-Listen;
- eine Notifikationsverwaltungseinheit zur Versendung von Notifikationsnachrichten als abonnierte Daten an untergeordnete Clienteinheiten;
- eine Konfigurationsverwaltungseinheit zur Verarbeitung von Konfigurationsnachrichten zur Einrichtung des Datenverwaltungsmoduls in dem Funknetz, inbesondere zur Festlegung der Hierarchiebeziehungen der Datenverwaltungsmodule.

Das Verwaltungsverfahren und die Datenverwaltungsmodule haben den Vorteil, dass
- ein Transport von Daten ohne semantische Bewertung durch die Datenverwaltungsmodule zu den Clientmodulen erfolgen kann;
- operationelle Daten und deren Änderungen durch Clientmodule entgegengenommen, persistent gespeichert und verteilt werden können;
- redundante Verbindungswege bei Verbindungsstörungen zwischen den verteilten Datenverwaltungsmodulen genutzt werden können;
- abonnierte Daten von Datenverwaltungsmodulen an Clientmodule bei dynamischen Datenänderungen automatisch zugestellt werden und der Datenverkehr minimiert wird; und
- eine Datenreplizierung definierbarer Strategie und Priorität unter Gewährleistung der Konsistenz erfolgen kann.

Die Erfindung wird nachfolgend anhand der beigefügten Zeichnungen beispielhaft näher erläutert. Es zeigen
- Fig. 1 -: Blockdiagramm eines schematischen Aufbaus eines herkömmlichen TOBS=TETRA Outdoor Base Stations;
- Fig. 2 -: Blockdiagramm der logischen Verknüpfung von Komponenten eines TETRA-Funknetzes mit erfindungsgemäßen Datenverwaltungsmodulen;
- Fig. 3 -: Blockdiagramm der Hierarchieebenen von Datenverwaltungsmodulen;
- Fig. 4 -: Ablaufdiagramm der Registrierung und Deregistrierung von Clientmodulen an Datenverwaltungsmodulen sowie der Abonnement-Listenverwaltung;
- Fig. 5 -: Blockdiagramm der Komponenten eines erfindungsgemäßen Datenverwaltungsmoduls;
- Fig. 6 -: Flussdiagramm des Initialisierens und Startens eines Datenverarbeitungsmoduls;

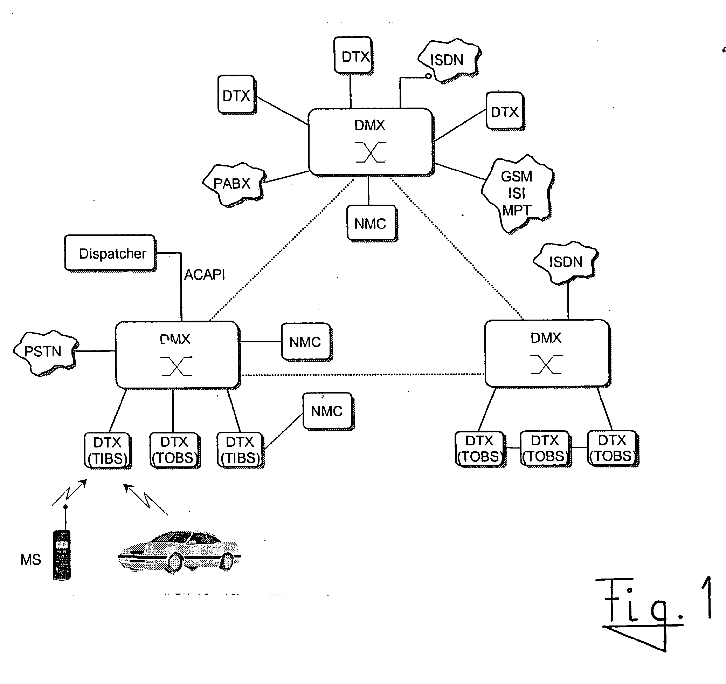

Die Figur 1 lässt ein Blockdiagramm eines herkömmlichen Funknetzes nach dem TETRA-Standard erkennen, der mit der europäischen Norm ETS 300392 festgelegt ist. Das Funknetz wird durch eine Vielzahl von miteinander vernetztes Vermittlungsstationen DMX gebildet, die über eine Netzstruktur von 2 Mbit-Leitungen miteinander verbunden sind. An den Vermittlungsstationen DMX sind die Basisstationen DTX eingesetzt, die mit ihrer jeweils zugeordneten Vermittlungsstation DMX über eine Anzahl von 64 KBit-Leitungen kommunizieren. Die Anzahl der 64 KBit-Leitungen hängen von der Anzahl der einzusetzenden Transceiver für die Funkkommunikation mit den Mobilfunkgeräten MS ab, die tragbar oder beispielsweise in einem Fahrzeug eingebaut werden können.

Als Basisstation DTX können auch sogenannte TETRA-Auto Base Stations TOBS eingesetzt werden, die speziell für den Außenbereich konzipiert sind. Als weitere Komponente sind die Vermittlungsstationen DMX und Basisstationen optional mit Netzwerkverwaltungs-Clientmodulen (Network Management Client NMC) für die Fehler-, Konfigurations- und Teilnehmer-Verwaltung verbunden. Weiterhin können Schnittstellen zu anderen Festnetzen (z. B. PABX, PSTN, ISDN) oder Mobilfunknetzen (GSM, ISI, MPT) vorgesehen sein. Diese Schnittstellen können sowohl in einer Vermittlungsstation DMX, als auch in einer Basisstation vorgesehen werden.

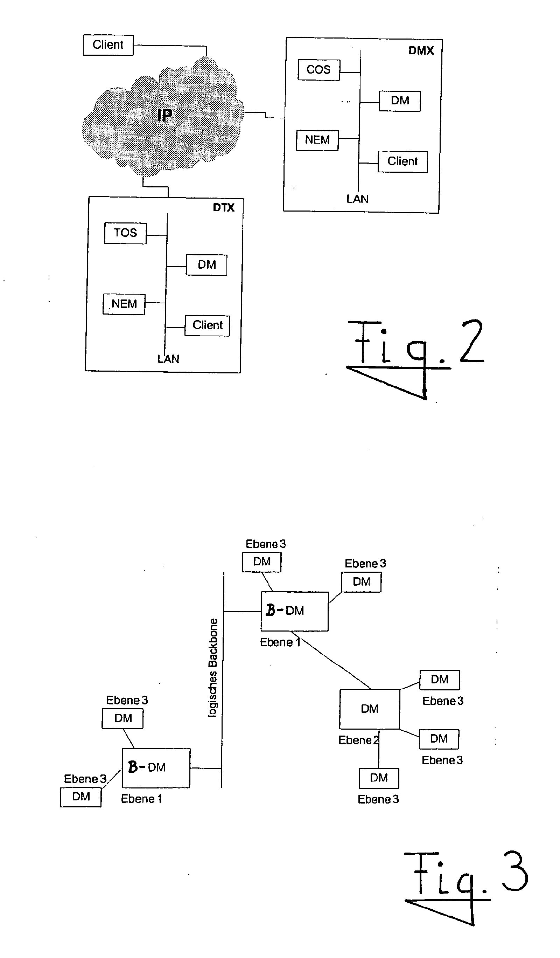

Die Figur 2 lässt die logische Verbindung von Vermittlungsstationen DMX und Basisstation DTX in einem IP-Netz als Blockdiagramm erkennen. Weiterhin werden die Komponenten der Vermittlungsstationen DMX und Basisstation DTX deutlich. Sowohl die Vermittlungsstationen DMX als auch die Basisstation DTX beinhalten jeweils einen Netzwerkelementmanager (Network Element Manager NEM), der für die Fehler (Fault) und Konfigurationsverwaltung (Configuration Management) zuständig ist. In einer Vermittlungsstation DMX befindet sich zudem noch ein nicht skizzierter sogenannter Core Operation Server COS der die Kernfunktionalität der Vermittlungsstation DMX von Vermittlung und Rufkontrolle (Call Control) enthält. Weiterhin ist ein nicht skizzierter sogenannter Switching and Routing Server SRS und eine Core Switching Unit CSU vorgesehen.

Die Basisstation DTX enthält als weitere Komponenten einen sogenannten TETRA-Operation Server TOS mit der Kernfunktionalität des Mobilitätsmanagements sowie einen Basisstations-Controller (BSC) und mehrere Transceiver TR (nicht skizziert).

Weiterhin ist das erfindungsgemäße Datenverwaltungsmodul DM in jeder Vermittlungsstation DMX und jeder Basisstation DTX integriert. Die Datenverwaltungsmodule sind prinzipiell als verteiltes System zu betrachten, wobei auf jedem Element des Funknetzes eine Instanz des durch die Datenverwaltungsmodule realisierten Datenmanagers vorhanden ist. Die auf den Elementen des Funknetzes vorhandenen Umsysteme (z. B. Core-Operation Server COS, TETRA-Operation Server TOS, etc.) werden als Clientmodule des Datenmanagers betrachtet. An jedem Datenverwaltungsmodul DM können sich innerhalb des IP-Netzes eine festgelegte Anzahl n von Clientmodulen client registrieren und dann mit dem Datenverwaltungsmodul DM kommunizieren.

Die maximale Anzahl n der registrierbaren Clientmodule ist hierbei durch die Randbedingungen der Systemumgebung, z. B. vorhandene Hardware, maximale Anzahl von "Threads" or "Handles", verfügbarer Hauptspeicher, etc., je nach konkretem Fall eingeschränkt. Zudem ist der Zugriff auch auf Clientmodule möglich, die außerhalb des lokalen Netzes (LAN) liegen und über das IP-Netz (z. B. Wide Area Network WAN) Zugriff auf ein Datenverwaltungsmodul DM haben.

Die Datenverwaltungsmodule DM können untereinander prinzipiell im gesamten Funknetz frei über das IP-Netz kommunizieren, so dass jedes Datenverwaltungsmodul DM von jedem anderen Datenverwaltungsmodul DM aus logisch gesehen direkt erreichbar ist.

Erfindungsgemäß werden Hierarchieebenen im Funknetzsystem konfiguriert, durch die die Kommunikationsrichtungen der Datenverwaltungsmodule DM vorgegeben werden.

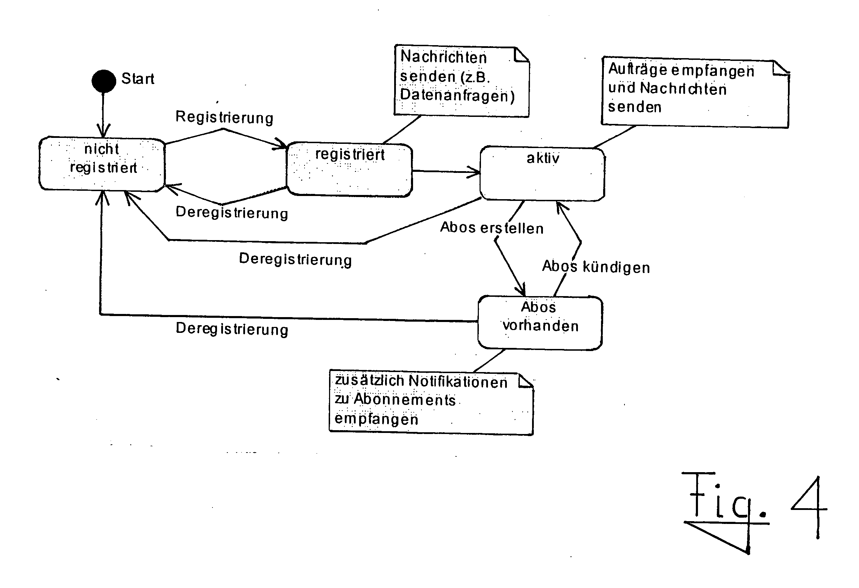

Die Figur 3 lässt eine solche Hierarchiestruktur der Datenverwaltungsmodule als Blockdiagramm erkennen. In einer komplett verteilten Architektur ohne jegliche zentrale Komponenten ist mit einer erhöhten Kommunikation zwischen den Knoten zu rechnen, da zu jedem Zeitpunkt an jedem Knoten alle Informationen zur Verfügung stehen müssen und dies einen ständigen Abgleich der Daten über das gesamte Netz erforderlich macht. Bei herkömmlichen Funknetzen sind jedoch zum einen die Bandbreiten begrenzt, so dass die Netzlast minimiert werden muss, zum anderen steht an den einzelnen Netzelementen (Vermittlungsstellen DMX, Basisstationen DTX) nicht unbegrenzt Speicherplatz zur Verfügung. Daher wird erfindungsgemäß ein verteiltes System basierend auf Hierarchieebenen vorgeschlagen.

Im Unterschied zu einer vom GSM-Standard bekannten zweistufigen Hierarchie sind die Datenverwaltungsmodule DM in dem vorliegenden Ausführungsbeispiel in eine dreistufige Hierarchie geordnet. Die Datenverwaltungsmodule DM, die keinen anderen Datenverwaltungsmodulen übergeordnet sind, befinden sich auf der niedrigsten Hierarchieebene 3. Auf der Hierarchieebene 2 liegen die Datenverwaltungsmodule DM, die denen der Hierarchieebene 3 übergeordnet sind. Auf höchster Hierarchieebene 1 befinden sich die Datenverwaltungsmodule DM, denen keine anderen Datenverwaltungsmodule übergeordnet sind. Diese bilden ein logisches Backbone der Datenverwaltungsmodul-Infrastruktur. Die Anzahl der Hierarchieebenen richtet sich nach Größe und Struktur eines konkreten Funknetzes, wobei auch eine zweistufige Hierarchie sinnvoll sein kann.

Es wird herausgestellt, dass sich Clientmodule auf allen Hierarchieebenen mit einem Datenverwaltungsmodul DM verbinden können.

Über die Konfiguration des Datenmanagers wird festgelegt, welche Knoten von einem Datenverwaltungsmodul DM als Backbone-Datenverwaltungsmodul B-DM genutzt wird. Hierbei sollte eine Orientierung an der tatsächlichen Topologie des Funknetzes erfolgen. So können die Datenverwaltungsmodule DM, die sich auf den über eine Backbone-Verbindung erreichbaren Knoten einer Vermittlungsstelle DMX befinden, als Datenverwaltungsmodul DM der Hierarchieebene 1 genutzt werden. Datenverwaltungsmodule DM auf allen anderen Knoten der Vermittlungsstelle DMX können als Datenverwaltungsmodule DM der Hierarchieebene 2 konfiguriert werden, während sich die Verwaltungsmodule DM auf den Knoten der Basisstationen DTX auf der Hierarchieebene 3 befinden.

Es ist vorteilhaft, wenn zur Ausfallsicherung für ein Datenverwaltungsmodul DM der unteren oder mittleren Hierarchieebene zwei übergeordnete Datenverwaltungsmodule DM konfiguriert werden, d. h. ein primäres und ein sekundäres übergeordnetes Datenverwaltungsmodul DM. Bei Ausfall des primären Datenverwaltungsmoduls DM wird dann das sekundäre Datenverwaltungsmodul DM als übergeordnetes Datenverwaltungsmodul DM zur Verteilung und Replikation verwendet. Weitere Möglichkeiten der Redundanz können durch redundante Vermittlungsstellen DMX, redundante Basisstationen DTX und Leitungsredundanzen realisiert werden.

Um die korrekte Verteilung von Daten bei Reduzierung der zu übertragenen Datenmenge und Reduzierung des erforderlichen Speicherplatzes sicherzustellen, werden die benötigten Daten innerhalb der Hierarchieebene kaskadiert abonniert, d. h. ein Datenverwaltungsmodul abonniert bei ihrem übergeordneten Datenverwaltungsmodul alle Daten, die entweder von den an dem Datenverwaltungsmodul registrierten Clientmodulen oder von einer ihrer untergeordneten Datenverwaltungsmodule DM benötigt werden.

So erhält ein Datenverwaltungsmodul DM der Hierarchieebene 3 dadurch nur die tatsächlich von den dortigen Clientmodulen abonnierten Daten. Ein Datenverwaltungsmodul DM der Hierarchieebene 2 erhält dagegen alle Daten, die von der Summe ihrer untergeordneten Datenverwaltungsmodule DM und ihrer eigenen Clientmodule abonniert werden. Die Backbone-Datenverwaltungsmodule B-DM enthalten den größten Datenbestand und replizieren diesen untereinander, soweit dies durch die Konfiguration dieser Datenverwaltungsmodule DM festgelegt wurde.

Wird ein Datum auf einer Hierarchieebene geändert, dann muss das dortige Datenverwaltungsmodul DM einerseits dafür sorgen, dass diese Änderung an alle Abonnenten in der Hierarchieebene nach unten weitergereicht wird. Andererseits muss sie aber auch dafür sorgen, dass sie diese Änderung zu ihrem übergeordneten Datenverwaltungsmodul DM repliziert. Dadurch ist sichergestellt, dass alle Daten in der Hierarchiestruktur nach oben wandern, so dass jedes Datenverwaltungsmodul DM die ihr fehlenden Daten von ihrem übergeordneten Datenverwaltungsmodul erhalten kann. Sind die Daten bei ihrem direkt übergeordneten Datenverwaltungsmodul DM nicht vorhanden, wird die Anfrage ent-lang der Hierarchie weiter bis zur Backbone-Ebene durchgereicht.

Der Informationsfluss findet hierbei immer entlang der Hierarchiestruktur statt, d. h. ein Datenverwaltungsmodul DM kommuniziert entweder mit seinem übergeordneten Datenverwaltungsmodul DM, mit seinen untergeordneten Datenverwaltungsmodulen DM oder mit den direkt an dem Datenverwaltungsmodul DM registrierten Clientmodulen. Eine Querkommunikation zwischen Datenverwaltungsmodulen DM derselben Hierarchieebene ist nur für speziell dafür konfigurierte Datenverwaltungsmodule DM vorgesehen, wie z. B. für die Datenverwaltungsmodule DM der Backbone-Ebene oder für redundante Datenverwaltungsmodule DM.

Bei der Kommunikation der Datenverwaltungsmodule DM mit anderen Datenverwaltungsmodulen DM oder Clientmodulen wird zwischen Replikation und Notifikation unterschieden. Notifikation ist die Weitergabe von Nachrichten vom Datenverwaltungsmodul an ein Clientmodul. Notifikationen enthalten Informationen über Änderungen an Daten und gegebenenfalls bereits die geänderten Daten selbst. Notifikationen sind immer Folge eines Abonnements eines Clientmoduls auf ein Datum.

Replikation ist eine Weitergabe von Daten, um Datenbestände auf verschiedenen Datenverwaltungsmodulen DM abzugleichen und konsistent zu halten. Repliziert wird nur zwischen Datenverwaltungsmodulen DM. Im Gegensatz zur Notifikation werden bei der Replikation immer die geänderten Daten transportiert. Darüberhinaus erfolgt die Replikation bidirektional zwischen den Datenverwaltungsmodulen DM, während Notifikationen immer nur von einem Datenverwaltungsmodul DM zu einem Clientmodul versendet werden.

Beiden Nachrichtentypen gehen Abonnements auf Daten voraus. Diese haben je nach Abonnement verschiedene Auswirkungen. Handelt es sich bei dem Abonnenten um ein Clientmodul, wird bei einer Datenänderung eine Notifikationsnachricht an das Clientmodul verschickt. Handelt es sich bei dem Abonnenten um ein Datenverwaltungsmodul DM, dann wird an dieses eine Replikationsnachricht geschickt. Die Replikation und der Einsatz von internen und externen "Exceptionhandlern", die eventuelle Replikationskonflikte auflösen können, erlaubt es, die Konsistenz der Daten über den gesamten Datenmanager sicherzustellen.

Ziel der Replikation von Daten zwischen einzelnen Datenverwaltungsmodulen ist zum einen die schnelle lokale Verfügbarkeit zu Daten, zum anderen auch die Datenredundanz zum Zwecke des Schutzes vor Datenverlust. Zwischen der Forderung nach geringer Netzlast einerseits und erhöhten Transportaufkommen durch die für die redundante Haltung von Daten benötigte Replikation andererseits besteht jedoch ein Widerspruch, dem mit dem sogenannten Lokalitätsprinzip begegnet wird. Dabei sollen die Daten so global wie nötig und so lokal wie möglich gehalten werden. Es wird daher vorgeschlagen, die Replikation von Daten durch Festlegung von Replikationsbereichen einzuschränken, der durch das Datenmodell bestimmt wird. Mit dem Attribut "Replicate-In-Backbone" wird festgelegt, dass das Datum von seinem Erzeugungsort an alle übergeordneten Datenverwaltungsmodule DM sowie entlang der Backbone-Datenverwaltungs-module B-DM repliziert wird. Über eine Liste von Backbone-Datenverwal-tungsmodule B-DM kann die Replikation auf eine Untermenge der verfügbaren Backbone-Datenverwaltungsmodule B-DM eingeschränkt werden.

Ohne dieses Attribut "Replicate-In-Backbone" ist der Replikationsbereich eines Datum zunächst nur der Entstehungsort des Datums und sämtlicher Abonnenten.

Die Information über die Verfügbarkeit von Daten sollte jedoch immer bis zur Backbone-Ebene verteilt werden. Metadaten sollten immer im gesamten Datenverwaltungsmodul-System verteilt werden, so dass der Zugriff von Daten von jedem der Datenverwaltungsmodule aus gewährleistet ist.

Die Kommunikation der Datenverwaltungsmodule DM untereinander und der Clientmodule mit den Datenverwaltungsmodulen DM erfolgt durch verschiedene Nachrichtentypen.

Abonnement-Nachrichten sind Nachrichten, mit denen Abonnements erstellt oder gelöscht werden. Der Nachrichtenfluss erfolgt von Clientmodulen zu Datenverwaltungsmodulen DM und von Datenverwaltungsmodulen DM zu anderen Datenverwaltungsmodulen DM. Ein Client-System beantragt oder löscht ein Abonnement über dies Abonnement-Nachrichten. Zwischen den Datenverwaltungsmodulen DM werden ebenfalls Abonnement-Nachrichten ausgetauscht, da Abonnements entlang der Hierarchieebenen weitergereicht werden.

Datennachrichten sind Nachrichten, die Daten abfragen oder Datenänderungen, Datenlöschungen oder Datenerzeugungen enthalten. Der Nachrichtenfluss erfolgt dabei von den Clientmodulen zu den Datenverwaltungsmodulen DM. Dabei stellen die Clientmodule über Datennachrichten Datenanfragen an das Datenverwaltungsmodul.

Konfigurationsnachrichten sind Nachrichten, die Konfigurationsinformationen für ein Datenverwaltungsmodul DM oder alle Datenverwaltungsmodule DM enthalten. Der Nachrichtenfluss erfolgt von den Clientmodulen zu den Datenverwaltungsmodulen DM sowie von Datenverwaltungsmodulen DM zu anderen Datenverwaltungsmodulen DM. Das Datenverwaltungsmodul DM wird über einen Konfigurationsclient konfiguriert, der hierzu die Konfigurationsnachrichten versendet. Um die Konfiguration zu anderen Datenverwaltungsmodulen weiterzuleiten, wird sie auch zwischen Datenverwaltungsmodulen DM versendet. Über Konfigurationsnachrichten können zum Beispiel Änderungen am Datenmodell (Metadaten) vorgenommen werden.

Notifikationsnachrichten sind Nachrichten, die Notifizierungsinformationen für ein Clientmodul enthalten. Die Notifikation kann Daten, über deren Änderung mit dieser Notifikation informiert werden soll, enthalten. Der Nachrichtenfluss erfolgt hierbei von den Datenverwaltungsmodulen DM zu den Clientmodulen. Es kann jedoch auch nur Nachrichten geben, die die reine Information über eine Datenänderung enthalten, ohne die geänderten Daten selbst. Jede Nachricht von einem Datenverwaltungsmodul DM an ein Clientmodul ist eine Notifikation.

Replikationsnachrichten sind hingegen Nachrichten, die Replikationsinformationen zur Weitergabe zwischen Datenverwaltungsmodulen DM enthalten. Der Nachrichtenfluss erfolgt dabei ausschließlich von einem Datenverwaltungsmodul DM zu einem anderen Datenverwaltungsmodul DM. Eine Datennachricht, die eine Änderung, Löschung oder Erzeugung darstellt, wird von einem Datenverwaltungsmodul DM an ein anderes Datenverwaltungsmodul DM in Form einer Replikationsnachricht weitergegeben.

Auftragsnachrichten sind Nachrichten, die Aufträge an Clientmodule enthalten. Der Nachrichtenfluss erfolgt dabei von einem Datenverwaltungsmodul zu einem anderen Datenverwaltungsmodul DM. Die Auftragsnachrichten gelangen zunächst über ein Clientmodul, das den Auftrag erzeugt, zum Datenverwaltungsmodul DM. Zur Weiterleitung werden sie gegebenenfalls zwischen den Datenverwaltungsmodulen DM ausgetauscht, bis sie schließlich von dem Datenverwaltungsmodul DM als Notifikationsnachricht zum ausführenden Clientmodul gelangen.

Exception-Nachrichten sind Nachrichten, mit denen Ausnahmesistuationen an sogenannte Exceptionhandler gemeldet werden. Die Behandlung dieser Ausnahmesituationen ist dann Aufgabe des Exceptionhandlers. Der Nachrichtenfluss erfolgt von Datenverwaltungsmodulen DM zu den Exceptionhandlern.

Registrierungsnachrichten sind Nachrichten, mit denen sich ein Clientmodul an einem Datenverwaltungsmodul DM registriert. Sie werden z. B. auch für die Registrierung eines untergeordneten Datenverwaltungsmoduls DM bei seinem übergeordneten Datenverwaltungsmodul DM verwendet. Der Nachrichtenfluss erfolgt von dem Clientmodul oder dem Datenverwaltungsmodul DM an das übergeordnete Datenverwaltungsmodul DM.

Alle Anfragen, die das Datenverwaltungsmodul DM über die sogenannten Requesthandler von einem Clientmodul entgegennimmt und verarbeitet, erhält eine systemweit eindeutige Identfikationsnummer in Form eines "Global Unique Identifier GUID". Nach erfolgreicher oder auch erfolgloser Verarbeitung werden die Anfragen dem aufrufenden Modul mit dem Global Unique Identifier GUID quittiert, der vom Datenverwaltungsmodul DM generiert wird und z. B. eine Kombination aus Zeitstempel und Absenderkennung sein kann.

In Abhängigkeit der Anfrage enthält die Quittung eine einfache Statusmeldung (Success oder Failure) oder auch die Daten- oder Information die abgefragt wurden. Diese Quittung wird als Notifikationsnachricht an das aufrufende System zurückgeschickt, wobei es Aufgabe des aufrufenden Systems ist, eine entsprechende Synchronisierung zu gewährleisten.

Um die Beseitigung von nicht mehr benötigten Daten im Datenverwaltungsmodul DM gewährleisten zu können, wird in jedem Datensatz über das Attribut "Quelle" gekennzeichnet, welches Clientmodul den Datensatz in das Datenverwaltungsmodul DM eingebracht hat. Auch Clientmodule können anhand dieses Attributs erkennen, welche Datensätze sie im Datenverwaltungsmodul DM abgelegt haben und diese gegebenenfalls selbsttätig löschen. Bei Deregistrierung oder Verbindungsabbruch erfolgt dann eine Löschung aller Daten der sich am Datenverwaltungsmodul DM abgemeldeten Quelle (Clientmodul oder Datenverwaltungsmodul DM) mit Hilfe des Attributs "Quelle".

Zusätzlich kann ein Selbstschutzmechanismus vorgesehen sein, der automatisch Datensätze löscht. Dieser Selbstschutzmechanismus kann z. B. ausgelöst werden, wenn der noch zur Verfügung stehende freie Speicherplattenplatz einen konfigurierbaren Schwellenwert unterschreitet. Das Datenverwaltungsmodul DM muss dann automatisch anhand von Indikatoren für jeden Datensatz entscheiden, ob dieser gelöscht werden soll. Solche Indikatoren können das Erstellungsdatum des Datensatzes, das Datum der letzten Änderung, das Datum der letzten Registrierung des erzeugten Clientmoduls und/oder die momentane Anzahl der Abonnenten sein.

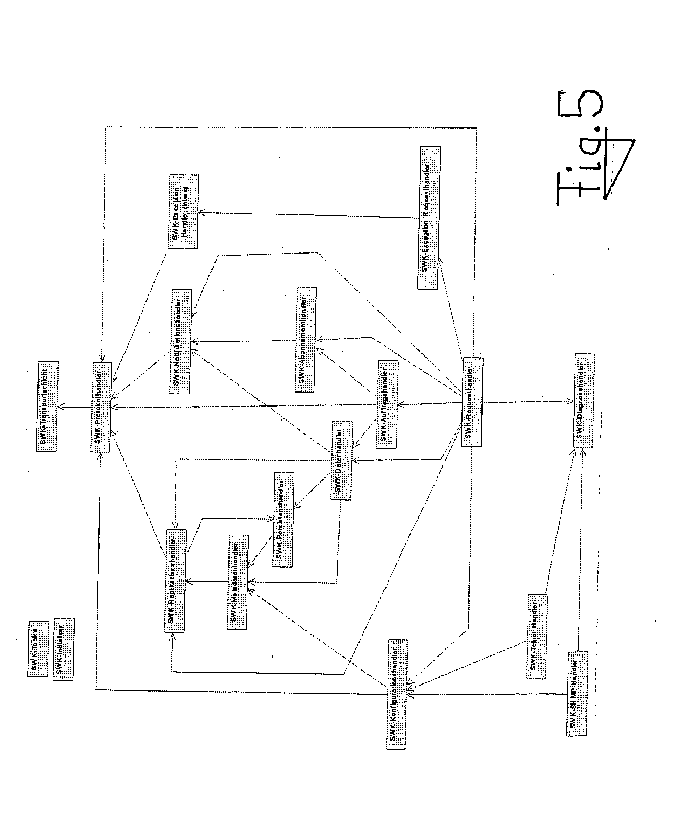

Die Figur 4 lässt ein Flussdiagramm mit dem Verbindungszuständen eines Clientmoduls erkennen. Clientmodule sind aus Sicht des Datenverwaltungsmoduls DM alle Umsysteme, die mit dem Datenverwaltungsmodul DM kommunizieren, um auf Daten zuzugreifen.

Nach Start des Clientmoduls befindet es sich im Zustand "nicht registriert". In diesem Zustand ist er dem Datenverwaltungsmodul DM nicht bekannt. Das Clientmodul kann aber eine Verbindung zu einem Datenverwaltungsmodul DM aufbauen, um sich dort zu registrieren. Nach seiner Registrierung an dem Datenverwaltungsmodul DM befindet sich das Clientmodul im Zustand "registriert" und ist von nun an dem Datenverwaltungsmodul DM bekannt. Ab diesem Zeitpunkt kann das Clientmodul über das Datenverwaltungsmodul DM auf Daten zugreifen. Es erfolgt jedoch keine Auslieferung von zielgebundenen Aufträgen an das Clientmodul. Das Clientmodul kann jedoch in diesem Zustand einen ungestörten Abgleich der Daten im Datenverwaltungsmodul DM mit seinen aktuellen Daten durchführen und so zum Beispiel alle von ihm erzeugten Daten abrufen, um dann gegebenenfalls veraltete Daten zu löschen.

Erst wenn das Clientmodul durch eine spezielle Registrierungsnachricht in den Zustand "aktiv" übergegangen ist, ist das Clientmodul für das Datenverwaltungsmodul DM sichtbar und kann zielgebundener Aufträge erhalten. Ein weiterer Zustand ist definiert, wenn das Clientmodul Abonnements erstellt hat. Es befindet sich dann im Zustand "Abos vorhanden", wobei in einer Abonnement-Liste die von dem Clientmodul benötigten Datenarten eingetragen sind. Die Abonnement-Liste wird in dem Datenverwaltungsmodul DM geführt, an dem das Clientmodul registriert ist.

In dem Zustand "Abos vorhanden" empfängt das Clientmodul etwaige Notifikationsnachrichten durch das Datenverwaltungsmodul DM. Nach Kündigung aller Abonnements durch das Clientmodul befindet es sich wieder im Zustand "aktiv".

Durch eine explizite Deregistrierung kann das Clientmodul jederzeit wieder in den Zustand "nicht registriert" wechseln. Hierbei werden auch implizit alle Abonnements des Clientmoduls in der Abonnement-Liste des zugeordneten Datenverwaltungsmoduls DM gelöscht. Im Zustand "nicht registriert" ist das Clientmodul dem Datenverwaltungsmodul DM nicht mehr bekannt, so dass z. B. keine Aufträge oder Notifikationen an dieses Clientmodul weitergeleitet werden können. Eine Deregistrierung kann auch implizit durch ein Verbindungsabbruch erfolgen.

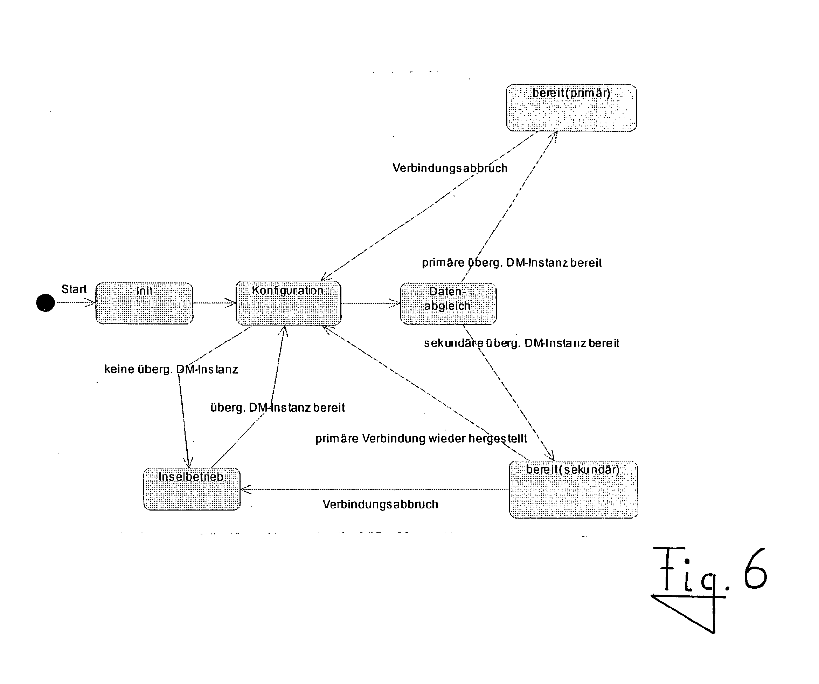

Die Figur 5 lässt ein Blockdiagramm des Datenverwaltungsmoduls DM mit seinen Komponenten und Abhängigkeiten der Komponenten erkennen.

Die Komponente "Tool-Kit" bietet einen plattformunabhängigen Zugriff auf Betriebssystem- und Netzwerkressourcen. Diese Komponente "Tool-Kit" wird von allen anderen Komponenten des Datenverwaltungsmoduls DM als Bibliothek verwendet, um Wiederverwendbarkeit und Plattformunabhängigkeit des Datenverwaltungsmoduls DM zu gewährleisten.

Die Komponente Initializer dient zur Initialisierung eines Datenverwaltungsmoduls beim Starten. Sie sorgt für eine abgeschlossene und konsistente Initialisierung des Datenverwaltungsmoduls DM, bevor diese die Verarbeitung von Anfragen aufnehmen kann. Die Komponente Initializer initialisiert dazu alle Komponenten des Datenverwaltungsmoduls DM in der Reihenfolge ihrer Abhängigkeiten und führt eine eventuell benötigte Konfiguration durch. Erst danach ist das Datenverwaltungsmodul DM betriebsbereit und beginnt eingehende Nachrichten zu verarbeiten.

Die Komponente "Transportschicht" dient zur Kommunikation über ein IPbasiertes Kommunikationsprotokoll. Es werden Funktionen und Datenstrukturen bereitgestellt, mit deren Hilfe die von einem Protokollhandler einkommenden Nachrichten von anderen Komponenten des Datenverwaltungsmoduls DM entgegengenommen und ausgehende Nachrichten an andere Komponenten des Datenverwaltungsmoduls DM versendet werden können. Die Transportschicht kann beispielsweise mit dem sogenannten BOP-Protokoll (BICK MOBILFUNK OPERATIONAL PROTOCOL) realisiert werden.

Der Protokollhandler ist eine Komponente zur Behandlung der o. g. Nachrichtentypen im Sinne eines Parsers. Der Protokollhandler stellt Klassen und Methoden bereit, mit denen andere Komponenten des Datenverwaltungsmoduls DM auf einfache Art und Weise Nachrichten an die Komponente "Transportschicht" weitergeben oder von ihr empfangen können. Optional kann der Protokollhandler Nachrichten prioritätsgesteuert versenden, wobei die Priorität einer Nachricht vom Absender eine Nachricht angegeben wird.

Eine weitere Komponente ist der Requesthandler zur Verarbeitung eingehender Nachrichten und Weiterleitung an den entsprechenden Nachrichtenhandler (Datenhandler, Replikationshandler, Abonnementhandler, Auftragshandler und/oder Konfigurationshandler). Je nach Nachrichtentyp leitet der Requesthandler nach Ankunft einer Nachricht diese an den entsprechenden Nachrichtenhandler weiter, der dann für die weitere Verarbeitung der Nachricht zuständig ist. Der Requesthandler ist auch dafür verantwortlich, Registrierungsnachrichten von Clientmodulen zu verarbeiten und dabei die notwendigen Verwaltungsdaten zu aktualisieren.

Weiterhin kann der Requesthandler einen Diagnosehandler bedienen, um Aktivitäten für Diagnosezwecke zu protokollieren.

Weiterhin kann eine Komponente "Exception-Requesthandler" zur Ausnahmebehandlung bei der Verarbeitung von Nachrichten sowie ein "interner Exceptionhandler IEH" zur Behandlung von Ausnahmesituationen vorgesehen sein. Je nach Fehlercode, Nachrichtentyp und Statusinformation wendet sich der Exception-Requesthandler ERH mit einer Exception-Nachricht an den internen Exceptionhandler IEH oder an einen externen Exceptionhandler. Dabei sind folgende Ausnahmesituationen denkbar:

Datensatz ist nicht vorhanden, Replikationskonflikt, Ausfall der Zeitsynchronisation, übergeordnetes Datenverwaltungsmodul DM ist nicht erreichbar, Inselbetrieb ist aktiv.

Diese Ausnahmesituationen können als Fehlercode von den Nachrichtenhandlern gemeldet werden oder in den Statusinformationen vorhanden sein.

Weiterhin ist die Komponente "Datenhandler" zur Behandlung von Datennachrichten als Nachrichtenhandler vorgesehen. Diese Komponente ist für die Verarbeitung von Datennachrichten zuständig und bietet den Zugriff auf diese Daten. Der Datenhandler setzt die von dem Requesthandler enthaltenen Datennachrichten in Aufrufe an die Persistenzhandler um und initiiert nach der Durchführung von Datenänderungen, Datenlöschungen und Datenerzeugungen die Replikation und Notifikation der Änderungen durch Aufruf des Replikations-handlers und Notifikationshandlers.

Nach Bearbeitung gibt der Datenhandler das Ergebnis in Form einer Quittierung gegebenenfalls mit den nachgefragten Daten an den Requesthandler zurück.

Der Datenhandler verwendet die Komponente "Metadatenhandler", um die Struktur der Daten zu ermitteln, d. h. beispielsweise zur Ermittlung von Position, Länge und Datentyp einzelner Felder. Der Metadatenhandler dient zur Behandlung des Datenmodells und der Metadaten und stellt Methoden und Mechanismen bereit, mit denen auf die Metadaten zugegriffen werden kann. Unter Metadaten wird hierbei die Beschreibung des Datenmodells sowie Attribute verstanden, die Aussagen über den Zustand eines Datums enthalten, wie beispielsweise das Erstellungsdatum eines Datums, der Erzeuger, etc.

Als Nachrichtenhandler ist weiterhin die Komponente "Replikationshandler" vorgesehen, die zur Behandlung von Replikationsnachrichten dient. Der Replikationshandler ist zuständig für die Verteilung von Daten an andere Datenverwaltungsmodule DM sowie für die Verarbeitung eingehender Replikationsnachrichten, die von anderen Datenverwaltungsmodulen DM verschickt werden. Weiterhin ist die Komponente "Notifikationshandler" vorgesehen, die zum Versenden von Notifikationsnachrichten an Umsysteme dient. Der Notifikationshandler wird involviert, wenn Clientmodule über eine Zustandsänderung im System informiert werden müssen. Solche Zustandsänderungen können sein:
1) Ein Datum hat sich geändert: Umsysteme, die sich auf dieses Datum abonniert haben, werden von dem Datenhandler mittels des Notifikationshandlers über die Änderung informiert. Je nach Abonnement-Typ enthält die Notifikationsnachricht hierbei nur die Information, dass sich die abonnierten Daten geändert haben, oder zusätzlich bereits die neuen Werte der geänderten Daten. Im ersten Falle ist das notifizierte Clientmodul selbst dafür zuständig, die geänderten Daten bei Bedarf über eine Datenabfrage vom Datenverwaltungsmodul DM abzufragen.
2) Ein Clientmodul hat eine Datenverwaltungsmodul DM ein Abonnement entzogen. Der Abonnent wird von dem Abonnementhandler mittels des Notifikationshandlers über den Entzug des Abonnements unterrichtet.
3) Ein Auftrag wird von einem Clientmodul bearbeitet oder erledigt. Der Auftraggeber wird von dem Auftraghandler mittels des Notifikationshandlers darüber informiert.
4) Ein Auftrag wurde von einem anderen Clientsystem storniert. Der Auftraggeber wird von dem Auftragshandler mittels des Notifikationshandlers über die erfolgte Stornierung informiert.
5) Generelle Quittierungen von Aktivitäten von einem Datenverwaltungsmodul DM an ein Clientmodul. Solche Quittierungen werden bei Bedarf von dem Requesthandler mittels des Notifikationshandlers an das Clientmodul verschickt.

Die Komponente "Abonnementhandler" dient zur Behandlung von Abonnementnachrichten und Abonnements. Der Abonnementhandler verarbeitet Abonnementnachrichten so, dass die entsprechenden Aktionen wie Abonnementerstellung, Abonnementlöschung oder Abonnementstornierung in den Abonnementlisten des Datenverwaltungsmoduls DM durchgeführt werden. Darüberhinaus stellt der Abonnementhandler Mechanismen bereit, um anderen Komponenten des Datenverwaltungsmoduls DM Informationen darüber bereitzustellen, welche Clientsysteme ein Datum abonniert haben. Im Falle des Entzugs eines Abonnements notifiziert der Abonnementhandler über den Notifikationshandler das Clientmodul über den Entzug seines Abonnements.

Die aktuelle Abonnementkonfiguration wird von dem Datenverwaltungsmodul DM nicht persistent gespeichert. Jedes Clientmodul muss somit nach seiner Registrierung am Datenverwaltungsmodul DM diesem die von ihm gewünschten Abonnements mitteilen. Geht die Verbindung zu einem Clientmodul verloren, dann wird das Clientmodul in dem Datenverwaltungsmodul DM registriert und seine Abonnements werden gelöscht. Gleichzeitig wird für Daten, bei denen das wegfallende Clientmodul der einzige Abonnement war, dann auch das Abonnement gelöscht, das das Datenverwaltungsmodul DM bei ihrem übergeordneten Datenverwaltungsmodul für dieses Clientmodul angemeldet hatte. Hierdurch werden die Abonnements rekursiv im Datenverwaltungsmodul-System gelöscht.

Optional können die aktuellen Abonnementkonfigurationen beispielsweise über eine Datenschnittstelle bei Bedarf abgefragt und einzelne Abonnements geändert oder gelöscht werden.

Als weitere Komponente ist ein Auftragshandler zur Behandlung von Auftragsnachrichten vorgesehen. Der Auftragshandler nimmt von dem Requesthandler Auftragsnachrichten entgegen und sorgt für deren korrekten Weiterverarbeitung. Hierzu werden Auftragslisten geführt, in die die Aufträge eingefügt werden.

Eine weitere Komponente "Konfigurationshandler" dient zur Behandlung von Konfigurationsnachrichten. Der Konfigurationshandler verarbeitet Konfigurationsnachrichten zur Änderung, Erweiterung, Löschung oder Aktivierung von Konfigurationseinträgen, mit denen beispielsweise folgende Einstellungen konfiguriert werden können.
1) das einem Datenverwaltungsmodul DM übergeordnete Datenverwaltungsmodul DM;
2) Änderungen am Datenmodell;
3) Aktivieren von Diagnosefunktionen;
4) Information, ob Zeitsynchronisation gegeben ist oder nicht.

Die untergeordneten Datenverwaltungsmodule DM werden nicht in den Konfigurationsdaten festgehalten. Sie ergeben sich vielmehr zur Laufzeit, indem sich jedes Datenverwaltungsmodul DM bei seinem übergeordneten Datenverwaltungsmodul DM registriert.

Weiterhin ist eine Komponente "Persistenzhandler" zur Speicherung von persistenten Daten vorgesehen. Er ist für die lokale Speicherung von Daten verantwortlich.

Optional ist ein Diagnosehandler zur Erstellung von Diagnosemeldungen, zur Sammlung von Informationen über den Status eines Datenverwaltungsmoduls DM vorgesehen. Zudem kann ein SNMP-Handler implementiert werden, der eine sogenannte SNMP-Schnittstelle zur Überwachung und Konfiguration eines Datenverwaltungsmoduls zur Verfügung stellt. Zudem kann ein sogenannter Telnethandler eine Telnet-Schnittstelle zur Überwachung und Konfiguration eines Datenverwaltungsmoduls DM zur Verfügung stellen.

Die Figur 6 lässt ein Flussdiagramm mit den Schritten beim Starten eines solchen Datenverwaltungsmoduls DM erkennen. Nach dem Start des Datenverwaltungsmoduls ist dieses im Zustand "Init". In diesem Zustand wird das Datenverwaltungsmodul DM zunächst von der Komponente "Initializer" initialisiert, indem diese die einzelnen Komponenten des Datenverwaltungsmoduls DM intialisiert.

Nach Initialisierung der Software-Komponenten wechselt das Datenverwaltungsmodul DM in den Zustand "Konfiguration". In diesem Zustand registriert sich das Datenverwaltungsmodul DM bei seinem übergeordneten Datenverwaltungsmodul DM und abonniert dort die Konfigurationslisten.

Die Konfigurationsliste enthält alle Konfigurationsnachrichten für ein Datenverwaltungsmodul DM. Analog dazu gibt es zur globalen Konfiguration des gesamten Datenverwaltungsmodul-Systems eine Konfigurationsliste, die die für alle Datenverwaltungsmodule gemeinsam geltenden Konfigurationsnachrichten enthält (globale Konfigurationsliste). Die Konfigurationsliste kann als Abonnement auf eine Klasse verstanden werden.

Bei Datenverwaltungsmodulen DM auf der Backbone-Ebene, denen keine andere Datenverwaltungsmodule DM übergeordnet sind, registriert sich das Datenverwaltungsmodul DM zur Konfiguration an einer der Nachbar-Datenverwaltungsmodule DM. Hierbei kann auch ein Nachbar-Datenverwaltungsmodul als primäres Datenverwaltungsmodul DM und ein weiteres als sekundäres Datenverwaltungsmodul DM konfiguriert werden.

Kann im Zustand "Konfiguration" das primäre übergeordnete Datenverwaltungsmodul DM nicht erreicht werden, dann versucht das Datenverwaltungsmodul DM sich bei ihrem sekundären übergeordneten Datenverwaltungsmodul DM zu registrieren und eventuell in der Auftragsliste liegende Konfigurationsnachrichten über diese abzurufen. Ist auch das sekundäre Datenverwaltungsmodul DM nicht erreichbar, wechselt das Datenverwaltungsmodul DM in den Zustand "Inselbetrieb".

Sofern ein übergeordnetes Datenverwaltungsmodul DM erreicht werden konnte, wechselt das Datenverwaltungsmodul DM in den Zustand "Datenabgleich". In diesem Zustand erfolgt der Abgleich des Datenbestands mit dem übergeordneten Datenverwaltungsmodul DM durch den Austausch von Replikationsnachrichten.

Sowohl bei dem übergeordneten Datenverwaltungsmodul DM, als auch bei dem startenden Datenverwaltungsmodul DM können Replikationsnachrichten vorhanden sein, da Replikationsnachrichten an übergeordnete oder zur Replikation konfigurierte Datenverwaltungsmodule DM persistent gespeichert werden, wenn sie nicht ausgeliefert werden konnten, um die Auslieferung zu einem späteren Zeitpunkt garantieren zu können.

Bei dem übergeordneten Datenverwaltungsmodul DM können Replikationsnachrichten existieren, die aufgelaufen sind, während das startende Datenverwaltungsmoduls DM nicht erreichbar war. Bei dem startenden Datenverwaltungsmodul DM können Replikationsnachrichten existieren, die vor dem Beenden dieses Datenverwaltungsmoduls DM nicht mehr versendet werden konnten. Der Datenabgleich erfolgt wie bei der Rückkehr aus dem Inselbetrieb.

Konnte die Verbindung zum primären übergeordneten Datenverwaltungsmodul DM hergestellt werden, dann wechselt das Datenverwaltungsmodul DM danach in den Zustand "bereit (primär)" und befindet sich im normalen operativen Betrieb. Wurde dagegen die Verbindung zum sekundären übergeordneten Datenverwaltungsmodul DM hergestellt, dann wechselt das Datenverwaltungsmodul DM in den alternativen Zustand "bereit (sekundär)".

Wird im Zustand "bereit (sekundär)" festgestellt, dass das primäre übergeordnete Datenverwaltungsmodul DM wieder verfügbar ist, so findet zunächst wieder ein Wechsel in den Zustand "Konfiguration" statt. Dort erfolgt die Registrierung an dem primären übergeordneten Datenverwaltungsmodul DM sowie das Abonnieren der Auftragsliste für Konfigurationsnachrichten, damit eventuell dort vorliegende Konfigurationsnachrichten abgerufen werden können. Ebenso erfolgt erneut der Datenabgleich. Erst danach wechselt das Datenverwaltungsmodul DM in den Zustand "bereit (primär)".

Wird im Zustand "bereit (sekundär)" festgestellt, dass die Verbindung zum sekundären übergeordneten Datenverwaltungsmodul DM ebenfalls abgebrochen ist, findet ein Wechsel in den Zustand "Inselbetrieb" statt.

Im Zustand "Inselbetrieb" wird zyklisch überprüft, ob entweder das primäre oder das sekundäre Datenverwaltungsmodul DM verfügbar ist. Gegebenenfalls wird wieder in den Zustand "Konfiguration" gewechselt.

## Patentansprüche

1. Verfahren zur Verwaltung von Funknetzen, insbesondere von TETRA-Bündelfunknetzen, die zur Kommunikation mit Mobilfunkgeräten (MS) eine Vielzahl von miteinander gekoppelten Vermittlungsstellen (DMX) und an die Vermittlungsstellen (DMX) angeschlossene Sende-/Empfangsbasisstationen (DTX) haben, wobei die Vermittlungsstellen (DMX) und Basisstationen (DTX) hierarchisch geordnete Datenverwaltungsmodule (DM) haben, und wobei die Datenverwaltungsmodule (DM) die Datenkommunikation von Clientmodulen steuern, die Elemente der Vermittlungsstellen (DMX) und/oder Basisstationen (DTX) oder an die zugehörige Vermittlungsstelle (DMX) oder Basisstation (DTX) angeschlossen sind, wobei die Clientmodule beim jeweiligen Datenverwaltungsmodul (DM) registriert sind, mit den Schritten:
a) Registrieren der Datenverwaltungsmodule (DM) bei ihren jeweils in der Hierarchieebene übergeordneten Datenverwaltungsmodulen (DM),
b) Registrieren von Clientmodulen jeweils an einem ausgewählten Datenverwaltungsmodul (DM),
c) Abonnieren von ausgewählten durch die Datenverwaltungsmodule (DM) verwalteten Daten, wobei ein in der Hierarchieebene untergeordnetes Datenverwaltungsmodul (DM) bei dem übergeordneten Datenverwaltungsmodul (DM), an dem das untergeordnete Datenverwaltungsmodul (DM) registriert ist, für die Verwaltung und den Betrieb angeschlossener Clientmodule und/oder in der Hierarchieebene untergeordneter Datenverwaltungsmodule (DM) erforderliche abonnierte Daten oder Datenänderungen durch Eintrag der Datenart in einer Abonnement-Liste anfordert, und
d) Weitergeben von abonnierten Daten von einem Datenverwaltungsmodul (DM) an das in der Hierarchieebene untergeordnete Datenverwaltungsmodul (DM) und/oder Clientmodul, wenn die Datenart in der Abonnement-Liste für das in der Hierarchieebene untergeordnete Datenverwaltungsmodul (DM) oder Clientmodul eingetragen ist.

2. Verfahren nach Anspruch 1, **dadurch gekennzeichnet, dass** die abonnierten Daten operative Daten, insbesondere Teilnehmerdaten, Meta-Daten zur Beschreibung der operativen Daten, Verwaltungsdaten zur Verwaltung des aktuellen Zustands von Datenverwaltungsmodulen (DM), Konfigurationsdaten zur Konfiguration von Datenverwaltungsmodulen (DM) und/oder Attributdaten als Zusatzinformationen zu den Daten sind.

3. Verfahren nach einem der vorhergehenden Ansprüche, **gekennzeichnet durch** Replikation von abonnierten Daten **durch** Übertragen von Änderungen abonnierter Daten zwischen hierarchisch **durch** Registrierung miteinander gekoppelten Datenverwaltungsmodulen (DM).

4. Verfahren nach Anspruch 3, **gekennzeichnet durch** Replikation abonnierter Daten in Abhängigkeit von der Datenart an alle in der Hierarchieebene übergeordnete Datenverwaltungsmodule (DM) und alle in der obersten Ausgangs-Hierarchieebene miteinander gekoppelten Datenverwaltungsmodule (DM).

5. Verfahren nach einem der vorhergehenden Ansprüche, **gekennzeichnet durch** persistente Speicherung von operativen Daten als abonnierte Daten **durch** die Clientmodule.

6. Verfahren nach einem der vorhergehenden Ansprüche, **gekennzeichnet durch** Generieren eines globalen Anfragecodes (GUID) in einem Datenverwaltungsmodul (DM) nach Empfang einer Datenanfrage eines Clientmoduls an das Datenverwaltungsmodul (DM) und Rücksenden des globalen Anfragecodes (GUID) nach Verarbeitung der Anfrage von dem Datenverwaltungsmodul (DM) an das Clientmodul.

7. Verfahren nach Anspruch 6, **dadurch gekennzeichnet, dass** das Rücksenden des globalen Anfragecodes (GUID) zusammen mit der Übertragung einer Statusnachricht über den erfolgreichen Abschluss der Verarbeitung der Anfrage erfolgt.

8. Verfahren nach einem der vorhergehenden Ansprüche, **gekennzeichnet durch** Löschen der für ein untergeordnetes Datenverwaltungsmodul (DM) oder Clientmodul in einer Abonnement-Liste abgelegten Abonnement-Daten bei Deregistrierung oder Verbindungsabbruch des untergeordneten Datenverwaltungsmoduls (DM) oder Clientmoduls.

9. Verfahren nach einem der vorhergehenden Ansprüche, **gekennzeichnet durch** Registrieren eines Datenverwaltungsmoduls (DM) bei einem sekundären in der Hierarchieebene übergeordneten Datenverwaltungsmodul (DM), wenn ein zugeordnetes primäres in der Hierarchieebene übergeordnetes Datenverwaltungsmodul (DM) nicht erreichbar ist, und Umschalten der zu registrierenden Datenverwaltungsmodule (DM) in einen Inselbetrieb, wobei im Inselbetrieb zyklisch überprüft wird, ob das primäre oder sekundäre Datenverwaltungsmodul (DM) wieder erreichbar ist.

10. Verfahren nach Anspruch 9, **gekennzeichnet durch** Zwischenspeichern von Datenänderungen während des Inselbetriebs und Übertragung der zwischengespeicherten Datenänderungen als abonnierte Daten an die entsprechend in der Abonnement-Liste registrierten Datenverwaltungsmodule (DM) und/oder Clientmodule.

11. Verfahren nach einem der vorhergehenden Ansprüche, **gekennzeichnet durch** Abgleich des zur Verwaltung erforderlichen Datenbestands nach Registrierung eines Datenverwaltungsmoduls (DM) mit dem in der Hierarchieebene übergeordneten Datenverwaltungsmodul (DM).

12. Datenverwaltungsmodul (DM) zur Verwaltung von Funknetzen mit dem Verfahren nach einem der vorhergehenden Ansprüche, **gekennzeichnet durch**
- eine Zugriffseinheit (Tool-kit) zur Steuerung eines Zugriffs des Datenverwaltungsmoduls (DM) auf Betriebssystem- und Netzwerkressourcen des Funknetzes,
- eine Initialisierungseinheit (Initializer) zur Initialisierung des Datenverwaltungsmoduls (DM) beim Starten des Datenverwaltungsmoduls (DM),
- eine Transportsteuerungseinheit zur Steuerung der Kommunikation über ein IP-Netz (WAN),
- eine Protokollverwaltungseinheit zur Auswertung von Nachrichten und Generierung entsprechender Steuerungssignale,
- eine Anfragenverwaltungseinheit zur Verarbeitung eingehender Nachrichten und Weiterleitung an eine ausgewählte Nachrichtenverwaltungseinheit, und
mit den folgenden Nachrichtenverwaltungseinheiten:
- Datenverwaltungseinheit zur Verarbeitung von Datennachrichten;
- Replikationsverwaltungseinheit zur Versendung von Replikationsnachrichten als abonnierte Daten an unter- und übergeordnete Datenverwaltungsmodule (DM);
- Abonnement-Verwaltungseinheit zur Verwaltung von Abonnement-Nachrichten und Abonnement-Listen;
- Notifikationsverwaltungseinheit zur Versendung von Notifikationsnachrichten als abonnierte Daten an untergeordnete Clienteinheiten;
- Konfigurationsverwaltungseinheit zur Verarbeitung von Konfigurationsnachrichten zur Einrichtung des Datenverwaltungsmoduls (DM) in dem Funknetz, insbesondere zur Festlegung der Hierarchiebeziehungen der Datenverwaltungsmodule (DM).
